(19) Europäisches Patentamt

European Patent Office

Office européen des brevets

(11) **EP 1 109 336 B1**

(12) **EUROPEAN PATENT SPECIFICATION**

(45) Date of publication and mention
of the grant of the patent:
**07.06.2006 Bulletin 2006/23**

(51) Int Cl.:
***H04B 10/155*** (2006.01)

(21) Application number: **00610092.9**

(22) Date of filing: **14.09.2000**

(54) **A method of initialisation of an optical transmitter**

Verfahren zur Initialisierung eines optischen Senders

Procédé d'initialisation d'un émetteur optique

(84) Designated Contracting States:
**AT BE CH CY DE DK ES FI FR GB GR IE IT LI LU
MC NL PT SE**

(30) Priority: **17.12.1999 DK 132199**

(43) Date of publication of application:
**20.06.2001 Bulletin 2001/25**

(73) Proprietor: **TELLABS DENMARK A/S
2750 Ballerup (DK)**

(72) Inventor: **Sorensen, Soren
2610 Rodovre (DK)**

(74) Representative: **Boesen, Johnny Peder et al
Zacco Denmark A/S
Hans Bekkevolds Allé 7
2900 Hellerup (DK)**

(56) References cited:
**US-A- 5 402 433          US-A- 5 502 298
US-A- 5 689 356          US-A- 5 850 303**

**Description**

The invention relates to a method of initialisation of an optical transmitter adapted to provide optical output power as a function of a current through the transmitter, and wherein a substantially linear relationship exists between the current and the optical output power for at least current values in an interval above a reference current limit, while a non-linear relationship exists between the current and the optical output power for at least current values in an interval below said reference current limit, wherein the method comprises the steps of applying to the transmitter a current comprising a DC current modulated with an AC modulation current, causing an optical mean power and an optical AC power to be emitted from the transmitter, measuring the optical output power from the transmitter and a level of distortion thereof due to said non-linear relationship, setting the modulation current to a lower current limit, and adjusting the optical mean power to a level which results in a predefined level of said distortion.

Normally, such transmitters are operated by applying a bias (DC) current modulated with a signal carrying (AC) current, resulting in a mean optical output power with a superposed AC optical power. Preferably, they are operated in the linear interval in order to keep the distortion resulting from unlinearity as small as possible. On the other hand, there is a wish to keep the optical mean power as small as possible in order e.g. to reduce power consumption and to minimize the total optical power transmitted in the network. Therefore, the transmitters are often calibrated to operate as close as possible to the non-linear interval.

Such optical transmitters are often used in optical networks comprising a plurality of optical transmitters and at least one optical receiver, e.g. passive optical networks. The optical transmitters often employ lasers emitting light with approximately the same wavelength, while the optical receiver may employ a single photodiode for receiving the light emitted from all the transmitters.

During operation of such networks it will often be expedient to be able to adjust the wavelength of individual transmitters, which may be done by e.g. changing the bias current, and thus the optical output power, of the transmitter. Such wavelength adjustment may be needed in e.g. optical beat noise suppression or in wavelength division multiplex systems. If a transmitter is calibrated to be as close as possible to the non-linear interval a change of the bias current in negative direction will put the transmitter into the non-linear interval and thus increase distortion considerably, which will normally be unacceptable.

Thus, it is an object of the invention to provide a method of initialisation of such an optical transmitter, said method allowing a change of the bias current in such a way that the transmitter remains in the linear interval.

According to the invention, this is achieved in that the method further comprises the step of defining an allowed minimum optical mean power value being a predefined factor higher than said optical mean power level resulting in a predefined level of distortion.

When the optical mean power is first adjusted to a level which results in a predefined level of said distortion, the transmitter is calibrated to be as close as possible to the non-linear interval at the lower end of the operating range of the transmitter. When the allowed minimum optical mean power value is thereafter selected to be a factor higher than the lower end of the operating range, it is ensured that there is sufficient room for further changes of the mean power during operation.

When, as stated in claim 2, the method further comprises the steps of setting the modulation current to an upper current limit, adjusting the optical mean power to a level which results in said predefined level of distortion, and defining an allowed maximum optical mean power value as said optical mean power level, resulting in a predefined level of distortion, multiplied by said predefined factor, the transmitter is similarly calibrated to be as close as possible to the non-linear interval at the higher end of the operating range of the transmitter, while ensuring sufficient room for further changes of the mean power during operation.

When, as stated in claim 6, the method further comprises the step of transmitting the optical output power through an attenuation device adjustable to attenuations between and including a minimum attenuation value and a maximum attenuation value before measuring the power, the calibration process is made easier.

An expedient embodiment of the method of the invention is stated in claim 7, in which the method comprises the steps of setting the adjustable attenuation device to said maximum attenuation value, setting said optical mean power to a predefined allowable maximum optical mean power, increasing the modulation current until a predefined target level of optical AC power is measured at the output of the adjustable attenuation device, reducing the optical mean power to a first level for which said distortion is at or below said predefined distortion level, readjusting the modulation current during the above step, if needed, so that said predefined target level of optical AC power is maintained at the output of the adjustable attenuation device, defining the setting of the modulation current as the allowed maximum modulation current, setting the adjustable attenuation device to said minimum attenuation value, turning the modulation current off, increasing the modulation current until the predefined target level of optical AC power is measured at the output of the adjustable attenuation device, reducing the optical mean power to a second level for which said distortion is at or below said predefined distortion level, readjusting the modulation current during the above step, if needed, so that said predefined target level of optical AC power is maintained at the output of the adjustable attenuation device,

defining the setting of the modulation current as the allowed minimum modulation current, calculating an allowed maximum optical mean power as said first level multiplied by said predefined factor, and calculating an allowed minimum optical mean power as said second level multiplied by said predefined factor.

When, as stated in claim 8, the method comprises the steps of connecting the optical transmitter to an optical network comprising at least one optical receiver, said network having an optical attenuation between said transmitter and said receiver, setting the optical mean power of the transmitter to a value which is the sum of a constant optical power and an optical power proportional to the optical attenuation between said transmitter and said receiver, and setting the modulation current of the transmitter to a value which is proportional to the optical attenuation between said transmitter and said receiver, it is ensured that a transmitter, when it is connected to a network after calibration, is set to the operating conditions corresponding to the actual attenuation.

Expediently, as stated in claim 9, the modulation current may be set to the allowed maximum modulation current divided by the maximum attenuation value and multiplied by the optical attenuation between said transmitter and said receiver. Similarly, as stated in claim 10, the optical mean power may be set to

$$P_{0,\max} - \frac{P_{0,\max} - P_{0,\min}}{A_{\max} - A_{\min}} (A_{\max} - A)$$ ,

where $P_{0,max}$ is the allowed maximum optical mean power, $P_{0,min}$ is the allowed minimum optical mean power, $A_{max}$ is the maximum attenuation value, $A_{min}$ is the minimum attenuation value, and $A$ is the optical attenuation between said transmitter and said receiver.

One way of setting the modulation current and the optical mean power to the values corresponding to the actual attenuation value is, as stated in claim 11, that the method comprises the steps of setting the modulation current and the optical mean power to the values corresponding to the minimum attenuation value, measuring the received optical AC power in the receiver, in case the predefined target level of optical AC power is not reached, setting the modulation current and the optical mean power to the values corresponding to stepwise increased attenuation values, until the predefined target level of optical AC power is reached. This embodiment has the advantage that the correct values are reached even if the relationship between the current and the optical output power of the transmitter is not perfectly linear, and further, in the case of e.g. optical beat noise suppression, the system has a chance to change the wavelengths of some of the other transmitters, and thus avoid excessive noise, before the newly connected transmitter operates at full power.

Alternatively, in the case where the receiver transmits optical signals at a fixed level back to the transmitter, as stated in claim 12, the method may comprise the steps of measuring the level of the optical signals received in the transmitter, calculating the optical attenuation between said transmitter and said receiver as said fixed level divided by the received level, and setting the optical mean power to the value corresponding to the calculated attenuation value. Here, the fact that the transmitter is able to measure and calculate the actual attenuation is used to set the optical mean power to the correct value directly, which is a faster method.

Similarly, this fact may be used for setting the modulation current to the value corresponding to the calculated attenuation value, as stated in claim 13, or the modulation current may be set according to claim 14, in which the method further comprises the steps of setting the modulation current to the value corresponding to the minimum attenuation value, measuring the received optical AC power in the receiver, in case the predefined target level of optical AC power is not reached, setting the modulation current to the value corresponding to stepwise increased attenuation values, until the predefined target level of optical AC power is reached.

When the optical mean power is set to the correct values directly, this may be done, as stated in claims 15 and 16, by performing the setting of the optical mean power and/or the modulation current to the value corresponding to the calculated attenuation value by increasing the optical mean power slowly until the value is reached. Thus, also this method, in the case of e.g. optical beat noise suppression, has a chance to change the wavelengths of some of the other transmitters, and thus avoid excessive noise, before the newly connected transmitter operates at full power.

The invention will now be described more fully below with reference to the drawing in which

figure 1 shows a General Hardware Block Diagram of a Passive Optical Network according to the invention,

figure 2 shows a flowchart for initialisation of Optical Network Units in the network of figure 1,

figure 3 shows a flowchart of an Optical Beat Noise Suppression Process,

figure 4 shows a subroutine flowchart for minimization of Optical Beat Noise in window,

figure 5 shows a diagram of Laser Diode Output Power versus Current,

figure 6 shows a block diagram of the Optical Network Unit front end, and

figure 7 shows a block diagram of the Optical Line Terminal front end.

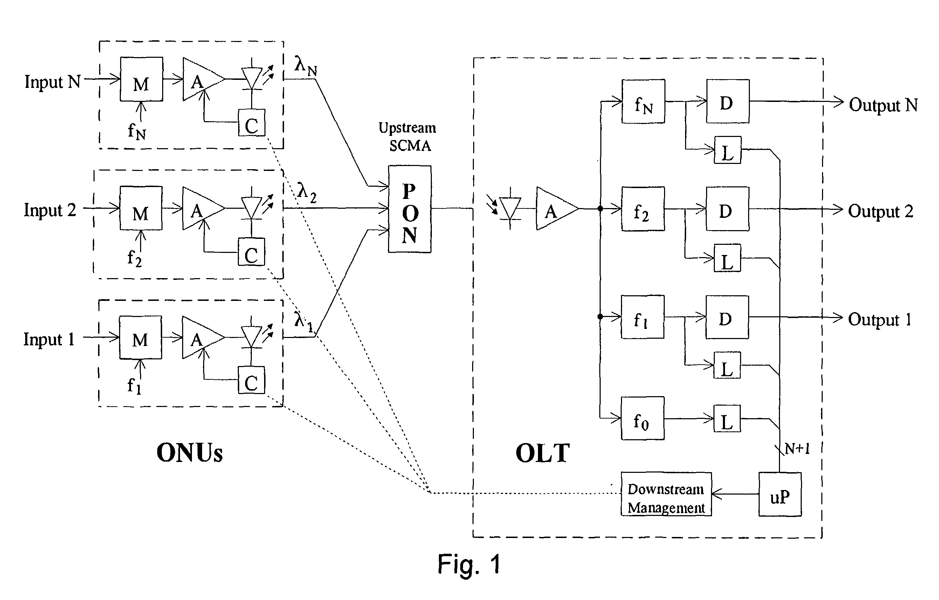

Figure 1 shows a Passive Optical Network (PON) in which the invention can be used for initialisation of the network with a view to obtaining optical beat noise suppression and power equalization.

Optical beat interference arises in optical receivers by a mixing process in the photodiode, due to the quadratic detection converting optical into electrical power, when two or more light sources illuminate the photodiode at the same time. If the received power from the light-sources is large enough and their wavelength differences small enough to cause unwanted disturbing mixing products in the electrical frequency range used for communication, the interference is defined as Optical Beat Noise (OBN).

In the Passive Optical Network (PON) shown in figure 1 the Optical Line Terminal (OLT) provides upstream SubCarrier Multiple Access (SCMA) for a number of Optical Network Units (ONUs) transmitting simultaneously, with the potential risk of OBN disturbing the communication in the subcarrier frequency range unless special precautions are taken.

The parameters affecting the amount of OBN in a SCMA-PON system are summarized below:

- The number of ONUs in the PON
- The type of optical sources in the ONUs
- The spectral distribution of the optical sources
- The number and the linewidth of longitudinal modes for the lasers
- The wavelength separation of the optical spectra
- Polarization of the individual optical modes
- The data bit rate and modulation format
- The subcarrier frequency
- The subcarrier modulation method and index

The Signal to Interference Ratio (SIR) is proportional to the square af the modulation index ($m_1 \leq 1$) and inversely proportional to the receiver bandwidth (B). Having chosen the number and type of optical sources and the receiver bandwidth for a given data bitrate and modulation format, the remaining methods of minimizing OBN may be divided into two main categories:

Spectral broadening

- LEDs as optical sources. The low output power limits the split ratio and transmission distance in the PON.
- Direct intensity modulation index m > 1. Limits the usable subcarrier frequency range due to harmonics.
- High subcarrier modulation frequencies. Increases the cost of transmitter and receiver.
- High frequency laser chopping. Increases the cost of transmitter and receiver.

Wavelength separation

- Laser selection by wavelength. Expensive, requires laser temperature control for multichannel field systems.
- Laser temperature control. Expensive, requires a record of wavelengths/temperatures for ONUs addition or replacement.
- Automatic wavelength control. Requires feedback from the receiver to each of the transmitters.

The method of OBN suppression and power equalization by downstream feedback described in the following section belongs to the second category. It relies on automatic fine-tuning of the laser wavelengths by small changes in the optical mean powers after equalization. Althoug feedback from the OLT is required it still provides a very economical way of reducing the number of bit errors and eliminating the risk of having long periods of high bit error rates caused by OBN.

This method relates to SubCarrier Multiple Access Passive Optical Networks (SCMA-PONs) using multilongitudinal mode Fabry-Perot lasers without temperature control, which are not selected to have separate wavelengths, for the reasons of simplicity and low cost. It is particular suited for direct intensity modulated systems requiring low subcarrier harmonic levels over a large optical dynamic range, but may also be used in systems where the modulation index is larger than 1, and in systems with an equal temperature stabilization of the ONU lasers.

The method of handling OBN described here is based on the fact that the laser wavelength changes slightly with the bias current, and the assumption that the OBN may be minimized by controlling the laser bias currents with feedback from measurements of the receiver noise floor, so that the number of bit errors caused by OBN is reduced.

Referring to Figure 1 a Passive Optical Network (PON) provides upstream SubCarrier Multiple Access (SCMA) for a number (N) of Optical Network Units (ONUs), with lasers transmitting on the wavelengths $\lambda_1, \lambda_2,...\lambda_N$. In each ONU the laser bias current, and thereby the optical mean power, is controlled by the circuit C, and the laser modulation current is controlled by the variable amplifier A. The input signals are modulated with the subcarrier frequencies $f_1, f_2,...f_N$ by means of the modulators M.

In the Optical Line Terminal (OLT) the photodiode converts the sum of optical signals to an electrical signal, which is amplified in A, and separated by a set of filters on the subcarrier frequencies $f_1, f_2,...f_N$. The output signals are recovered from the subcarriers by the demodulators D.

The dynamic range of an SCMA-PON using Fabry-Perot lasers becomes very small in the presence of OBN when the laser modulation index is less than 1. Furthermore the attenuation may be very different for each branch in a practical PON, and therefore equalization of the received optical AC power from the ONUs is advantageous. This is implemented by means of level detectors L on the filter outputs providing feedback to the power and modulation controls of the ONUs, via a microprocessor uP and a downstream TDMA or SCMA management channel, during initialisation of the network, as described below.

Subsequently the receiver noise floor is continuously measured in some free bandwidth not used for transmission channels and separated from these by a filter $f_0$. The filtered noise is applied to a level detector L, the output of which is used to control the ONU laser bias currents, via the microprocessor and a downstream TDMA or SCMA management channel, according to the procedure described below.

It should be emphasized that Figure 1 only illustrates the general hardware principle of power equalization and OBN supression, and does not show details of any specific implementation. In a real system the subcarrier filters may for instance be heterodyne receivers, and the downstream management may be carried together with payload traffic over the same PON as the upstream SCMA by means of bi-directional optical devices in the OLT and the ONUs. The hardware of such a specific system is described below.

Below a description of the software of the system is given. The description is divided into two parts. The first part describes the initialisation of the ONUs, which incorporates power equalization in order to accommodate the different attenuations of the PON branches and to establish the initial conditions for the subsequent OBN suppression process, which is described in the second part.

Only the general principles are described, since the actual details depend on the specific hardware implementation.

The OLT software includes a table with actual status values S(ID) for the N possible ONUs in the PON. When an ONU is added the user assigns its serial number to a subcarrier (ID) from the table, thereby changing its status to expected.

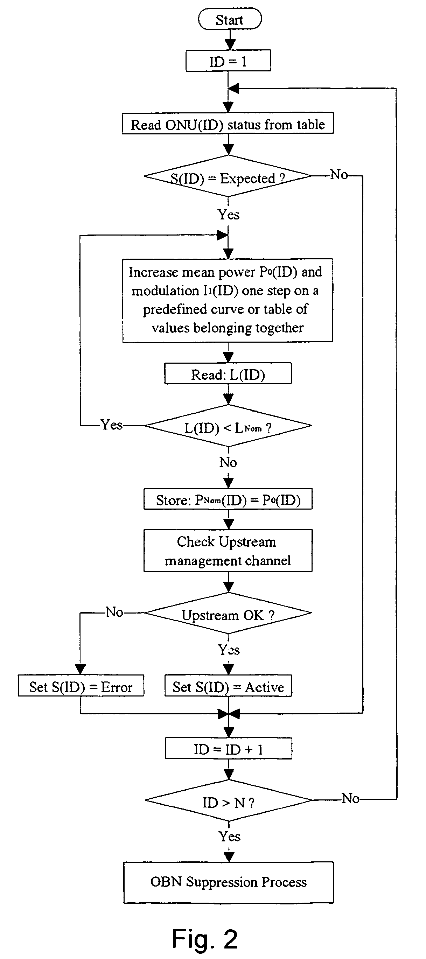

For each of the expected ONUs in the PON the optical mean power and modulation are increased stepwise, on a predefined curve or table of values belonging together, until a specific level $L_{Nom}$ is reached on the output of the corresponding receiver level detector. The corresponding mean power setting $P_{Nom}(ID)$ is stored for later use, and if the upstream management channel is working OK the ONU is declared active. A flowchart of this process is shown in Figure 2.

After initialisation there will be a number of active and power equalized ONUs in the PON, each with their own separate management channel enabling them to send status information and acknowledge commands from the OLT.

The OBN suppression process is implemented as a moving window minimum search within specified limits as follows:

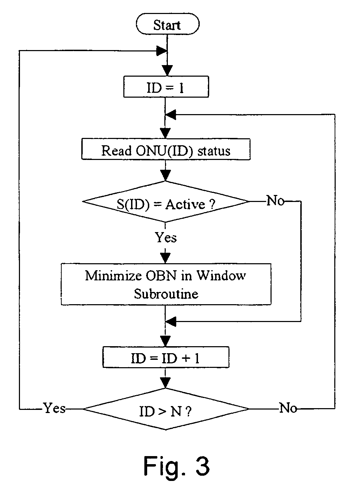

After initialisation each of the active ONUs in turn passes trough a one cycle search, which minimizes the OBN within a window of mean power. This is continously repeated for all active ONUs in the PON as shown in Figure 3.

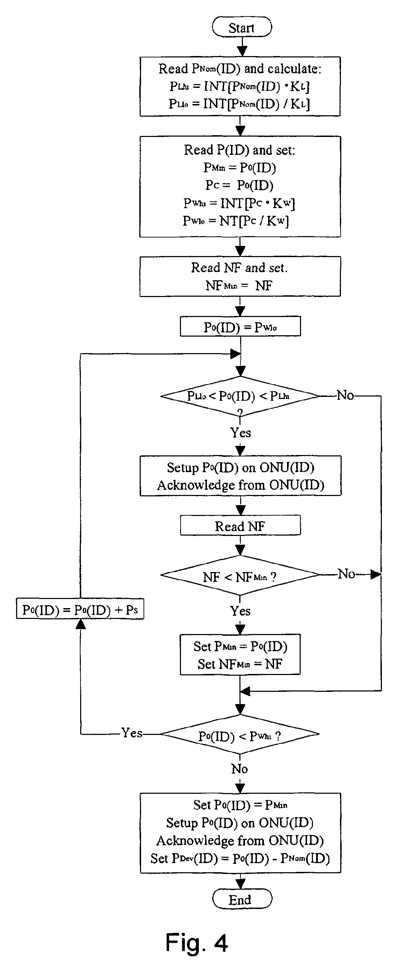

In the one cycle search the actual mean power $P_0(ID)$ is stepped trough a window, and set to the value $P_{Min}$ causing minimum output of the receiver noise floor level detector. The window centre $P_C$ equals the minimum found in the previous search cycle for that ONU, starting with $P_{Nom}(ID)$ immediately after initialisation, and the window size is specified as a factor $K_w$ relative to $P_C$. To prevent moving too far away from the nominal mean power, only that part of the window which is within the limits specified as a factor $K_L$ relative to $P_{Nom}(ID)$ is searched for a minimum. In order to ease monitoring of the process the actual deviation from nominal mean power $P_{Dev}(ID)$ is calculated at the end of each sweep. A flowchart of this subroutine is shown in Figure 4.

Only one window sweep is performed for an ONU before proceeding to the next one, thus allowing the mean powers, and thereby wavelengths, of the active ONUs in the PON to move around within the specified relative limits, trying to find the combination which gives the lowest noise floor at $f_0$ in the receiver.

In the absence of OBN the nominal mean power settings should remain unchanged. As soon as OBN tends to appear it should be suppressed by this process, provided that the changes in the OBN level are sufficiently slow compared to the time it takes to perform a window sweep for all ONUs in the PON.

The efficiency of this OBN suppression process also depends on the size of the sweep window and the range of the allowed mean power deviation. If $K_W$ is small the probability of being caught in a local minimum is greater, but if $K_W$ approaches $K_L$ a power value causing higher OBN is more likely to be tested during a sweep.

Furthermore, the allowed mean power deviation $K_L$ depends on the system design and the nature of the predefined curve or table of values used during equalization, which determines the ONUs modulation index after initialisation. Design considerations of this kind are discussed below.

A list of the variables used in the flowcharts is given below:

| | |
|---|---|
| N | Maximum number of ONUs in the PON. |
| ID | Identification = channel number = subcarrier number, $1 \leq ID \leq N$. |
| ONU(ID) | The ONU which has been assigned to ID. |
| S (ID) | Status for ONU (ID), possible values: Expected, Not expected, Active, Error. |
| $P_0(ID)$ | Actual mean power setting for ONU(ID). |
| $I_1(ID)$ | Actual amplitude of modulation current setting for ONU(ID). |
| L(ID) | Actual output of communication channel no. ID level detector. |
| $L_{Nom}$ | Target output of communications channel level detectors after initialisation, constant. |
| $P_{Nom}(ID)$ | Nominal mean power setting of ONU(ID) after initialisation. |
| KL | Limit of allowed mean power deviation, relative to $P_{Nom}$ (ID), constant. |
| $P_{Lhi}$ | Upper limit of allowed mean power. |
| $P_{Llo}$ | Lower limit of allowed mean power. |
| $P_C$ | Center of mean power sweep window |
| $K_W$ | Limit of mean power sweep window, relative to $P_C$, constant, $K_W < K_L$. |
| $P_{Whi}$ | Upper limit of mean power sweep window. |
| $P_{Wlo}$ | Lower limit of mean power sweep window. |
| NF | Actual output of Noise Floor level detector, i.e. the one on the $f_0$ output. |
| $NF_{Min}$ | Minimum output of Noise Floor level detector. |
| $P_{Min}$ | Setting of mean power causing $NF_{Min}$. |
| $P_S$ | Smallest step in mean power setting. |
| $P_{Dev}(ID)$ | Deviation from nominal mean power for ONU(ID), updated after each window sweep. |

When modulated with a sinusodial subcarrier of frequency $f_c$ the laser output power of the ONU is given by:

$$P(t) \ = \ P_0 + P_1 \cos(2\,\pi f_c\,t) + P_2 \cos(4\,\pi f_c\,t) + .... \tag{1}$$

The modulation index m and relative second harmonics level s are given by:

$$m = \frac{P_1}{P_0} \tag{2}$$

and

$$s = \frac{P_2}{P_1} \tag{3}$$

Values of m > 1 are allowed because the higher order terms in (1) add components that prevent P(t) from going negative. The allowed maximum value of m = 2 occurs when P(t) is a series of infinite narrow pulses repeating at the subcarrier period $1/f_C$.

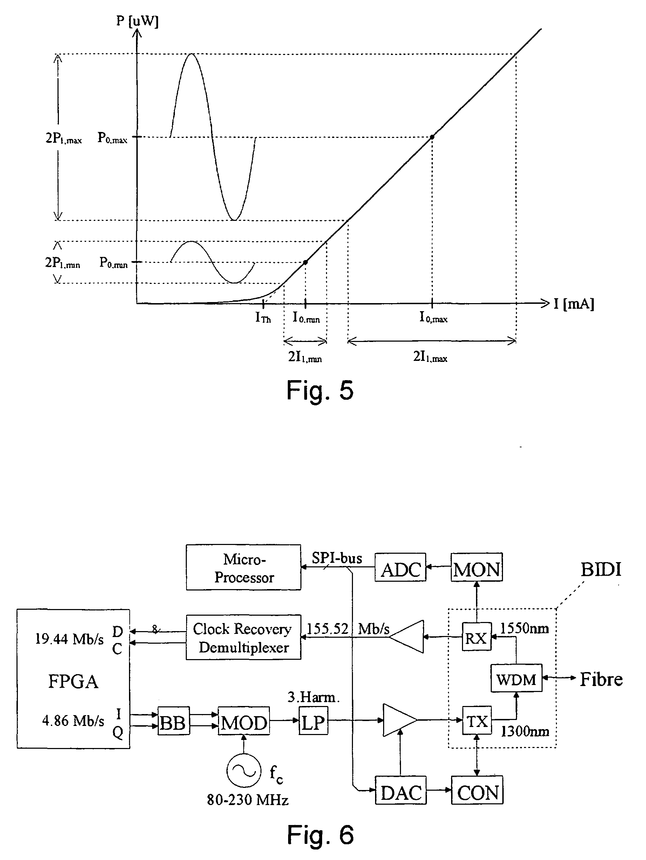

For an ideal laser diode the higher order terms in (1) are zero in the linear range above threshold. This is illustrated in Figure 5, for a constant modulation index m = 0.5 within the dynamic range from $P_{0,min}$ to $P_{0,max}$. For a real laser diode the range above threshold is non-linear, which is most significant just above threshold. For a fixed modulation index the harmonic distortion will therefore increase when the mean output power is decreased.

For SCMA systems where harmonics of the lower channels fall within the subcarrier range only values of m < 1 are allowed, in order to maintain a non-disturbing harmonics level. The maximum value $m_{max}$ < 1 at $P_{0,max}$ must therefore be decreased to $m_{min}$ < $m_{max}$ at $P_{0,min}$ in a way not causing excessive harmonics within the dynamic range, even if the mean power is reduced by the $K_L$ factor in the OBN suppression process after equalization. However the modulation index should be as great as possible within the dynamic range in order to minimize initial OBN.

Empirically a suitable compromise is obtained by setting the optical power $P_0$ versus attenuation A according to:

$$P_0(A) = a \cdot A + b \qquad\qquad (4)$$

Inserting the limits of the dynamic range $P_{0,min} = P_0(A_{min})$ and $P_{0,max} = P_0(A_{,max})$ and solving for a and b yield:

$$P_0(A) = P_{0,max} - \frac{P_{0,max} - P_{0,min}}{A_{max} - A_{min}} (A_{max} - A) \qquad\qquad (5)$$

If the second harmonic according to (3) is to be kept below the level 10 log(s) = - S [dBc] over the dynamic range during the OBN suppression process, the following calibration procedure may be used to establish the values of $P_{0,max}$ and $P_{0,min}$:

- The optical attenuation is set to $A_{max}$ and the ONU laser is set to its allowable maximum mean output power.
- The modulation current $I_1$ is increased until the OLT receiver target level $L_{Nom}$ is reached.
- The mean output power is reduced to the level $P_{02,max}$ for which the second harmonic is S dB below the carrier.
- The modulation may be readjusted during this in order to maintain $L_{Nom}$, and the final setting $I_{l,max}$ is noted.
- The optical attenuation is set to $A_{min}$, and the modulation turned off.
- The modulation current $I_1$ is increased until the OLT receiver target level $L_{Nom}$ is reached.
- The mean output power is reduced to the level $P_{02,min}$ for which the second harmonic is S dB below the carrier.
- The modulation may be readjusted during this in order to maintain $L_{Nom}$, and the final setting $I_{1,min}$ is noted.
- The values of maximum and minimum output power to be used in (5) are then calculated as:

$$P_{0,max} = K_L \cdot P_{02,max} \qquad and \qquad P_{0,min} = K_L \cdot P_{02,min} \qquad\qquad (6)$$

The required modulation current versus optical attenuation is calculated as:

$$I_1(A) = \frac{I_{1,max}}{A_{max}} \cdot A \qquad\qquad (7)$$

The stepwise increase of mean power and modulation current during the ONUs initialisation may then be done for a number of attenuation values according to (5), (6) and (7) starting with $A_{min}$ and increasing to the value of A where the OLT receiver target level is reached.

The calibration procedure above is to ensure that the maximum second harmonics level is not exceeded in the subsequent OBN minimization process, assuming that the laser temperature is held constant or that the modulation current amplitude is properly compensated for the change in the P/I slope with temperature.

After equalization the optical power received by the OLT on the fundamental frequency $f_c$ is a constant: $K_1$ = P1/A. According to (2) the modulation index is then: m = $K_1 A/P_0$, which in terms of $K_1 = m_{max}P_{0,max}/A_{max}$ becomes:

$$m(A) = m_{max} \cdot \frac{P_{0,max}}{A_{max}} \cdot \frac{A}{P_0(A)} \qquad (8)$$

The minimum modulation index may be written as a fraction of the maximum:

$$m_{min} = m_{max} \cdot \frac{P_{0,max}}{A_{max}} \cdot \frac{A_{min}}{P_{0,min}} \qquad (9)$$

Now if the downstream TDMA data is carried over the same fibres as the upstream SCMA data, by means of bi-directional optical devices in the OLT and the ONUs, then the attenuation may be calculated as:

$$A = \frac{P_S}{P_R} \qquad (10)$$

where $P_S$ is the constant optical mean power transmitted by the OLT and $P_R$ is the received optical mean power in the ONU. Substituting (6) and (10) into (5) yields:

$$P_0(P_R) = K_L \cdot \left[ P_{02,max} - \frac{P_{02,max} - P_{02,min}}{1/P_{R,min} - 1/P_{R,max}} (1/P_{R,min} - 1/P_R) \right] \qquad (11)$$

An alternative way of performing power equalization of the ONUs is then first to measure the optical mean input power in the ONU, then to set the optical mean output power according to (11) and finally to increase the modulation current until the OLT receiver target level is reached.

However the latter procedure may cause more optical interference with other channels when a new ONU is added to a working system, since the nominal optical mean power is applied before the modulation is turned on. From this point of view it is probably better slowly to increase mean power and modulation simultaneously, allowing the OBN minimization process more time to work on the active ONUs.

Assuming that the small changes in laser mean output power, which do not cause excessive harmonics or significant changes in the subcarrier level, will result in sufficient wavelength changes to reduce the optical beat noise, both at the measurement and communications channel frequencies, a reduction in the number of bit errors caused by OBN will be obtained.

In a static temperature situation, where two or more lasers are beating, causing a high noise floor and bit error rate, activation of the algorithm will reduce these to acceptable levels in a short time, depending on the algorithm excecuting speed i.e. the number of ONUs, the window and limit parameters: $K_W$ and $K_L$, the DAC and ADC setup and readout times, the micro-processor clock and the management communication speed.

In a dynamic temperature situation, where two or more lasers are beating temporarily due to wavelengths passing each other, a reduction in the peak noise floor level cannot be expected, but one should expect a reduction in the duration of the high noise floor level and the total number of bit errors when the algorithm is activated, if the temperature/ wavelength changes are slow enough compared to the algorithm executing speed. At some rate the algorithm cannot follow the temperature/wavelength changes any longer and the error reduction effect will be lost.

The following section describes how the principles of power equalization and OBN suppression by downstream feedback can actually be implemented in a specific system. The BBL PON system carries the downstream TDMA data on 1550 nm over the same fibres as the upstream SCMA data on 1300 nm by means of bi-directional optical devices BIDIs, containing integrated Wavelength Division Multiplexers WDMs, in the OLT and the ONUs. This minimizes the interference from optical reflections. The TDMA modulation format is 155.52 Mb/s optical NRZ and the SCMA modulation format is 9.72 Mb/s QPSK on 16 subcarriers in the frequency range from 80 to 230 MHz.

A block diagram of the ONU front end is shown in Figure 6. The received optical mean power is monitored by the Micro-Processor via the MON and ADC circuits. The 155.52 Mb/s data from the optical receiver RX is demultiplexed into 8 bits parallel, and the recovered clock is used for timing of the 4.86 Mb/s I/Q symbol rate in the upstream direction in the FPGA. Via the base-band filter BB the programmable subcarrier frequency $f_c$ is QPSK modulated with the I/Q symbols in the modulator MOD, and via the 3rd harmonics low-pass filter LP the optical transmitter TX is modulated with the subcarrier. The transmitted optical mean power and modulation index is controlled by the Micro-processor via the DAC and CON circuits.

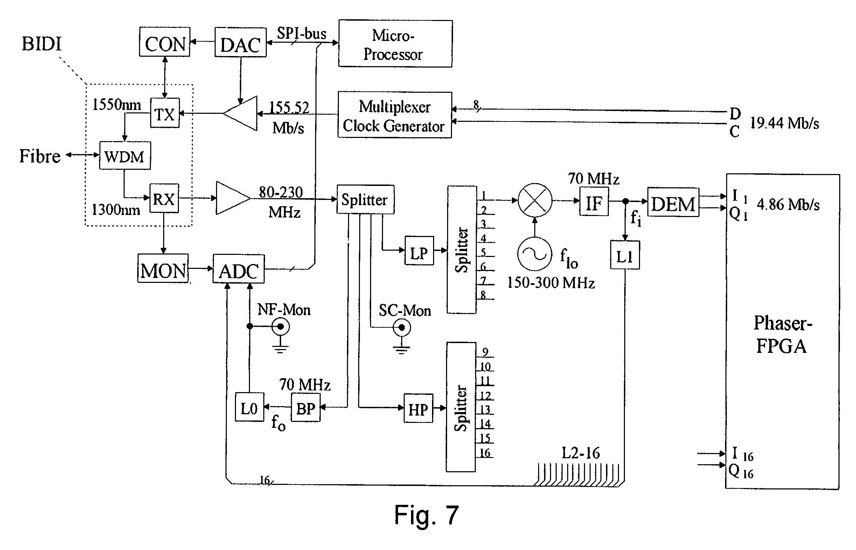

A block diagram of the OLT front end is shown in Figure 7. The optical transmitter TX is modulated with the 155.52 Mb/s data from the 8 bit parallel to serial Multiplexer, and the transmitted optical mean power and extinction ratio is controlled by the Micro-processor via the DAC and CON circuits.

The received optical mean power is monitored by the Micro-Processor via the MON and ADC circuits, and the subcarriers from the optical receiver RX are fed into a 4 way power splitter, the outputs of which are connected to:

- A low-pass filter LP for image rejection followed by an 8 way power splitter for the lower channels 1-8.
- A high-pass filter HP followed by an 8 way power splitter for the upper channels 9-16.
- A band-pass filter BP followed by a level detector L0 for measuring the receiver noise floor at f0 via the ADC.
- A subcarrier monitor point SC-Mon for connection to an electrical spectrum analyzer via a 50 Ω coax cable.

Each of the power splitter outputs 1-16 are connected to identical heterodyne receivers. In these the input signal is mixed with the programmable local oscillator frequency $f_{l0}$ and down-converted by band-pass filtering in IF to the intermediate frequency $f_i$, which is finally QPSK demodulated to the I/Q symbols in the demodulator DEM. The I/Q outputs of the receivers are fed into the Phaser-FPGA, which handles clock recovery, phase alignment, ambiguity resolution and multiplexing to 9.72 Mb/s on all 16 channels.

Each receiver also contains a level detector L1-L16 for measuring the intermediate frequency level via the ADC. This is used for comparison with the target level $L_{Nom}$ during initialisation of the ONUs.

The BIDIs used in the ONU and the OLT could be Siemens type SBL414G and SBM81314G. They contain a receiver PIN-diode, a transmitter laser diode, a laser monitor diode and integrated WDM with single mode fibre pigtail. Since there is no integrated peltier element the laser temperature is allowed to drift, but an external sensor measures the temperature close to the housing. The mean output power is set by comparing the monitor diode output with a programmable reference, which means that it is practically temperature independent, while the laser bias current increases with temperature. The sinusoidal modulation current in the ONU and the pulse current in the OLT are compensated for the decrease in P/I slope with increasing temperature in order to obtain a practically temperature independent modulation index in the ONU and extinction ratio in the OLT.

Figure 6 and Figure 7 only show the front end parts of the ONU and the OLT, since a description of the additional digital processing parts, physically contained in these modules, is not relevant to the invention. However, it should be mentioned that these front ends are used in two digitally different types of PON systems, i.e. the Synchronous-PON (SPON), where each 9.72 Mb/s channel transports 4 multiplexed 2.048 Mb/s and the Asynchronous-PON (APON), where each 9.72 Mb/s channel transports 9.3 Mb/s ATM traffic.

The software for power equalization and OBN suppression is exactly as described above when the mean power $P_0$ is replaced with the input value (0-255) to the 8 bit DAC controlling the mean power in Figure 6.

Below some of the design criteria for the BBL PON system with respect to the modulation format, the frequency plan and the optical dynamic range are described.

Modulation Format

For PSK modulated systems with $M = 2^n$ states of phase the 3 dB transmission bandwidth $B_t$ equals the symbol rate $R_s$, which in turn equals the bit rate $R_b$, divided by n. This means that for:

BPSK,     where n = 1 and M = 2,       $B_t = R_s = R_b$
QPSK,     where n = 2 and M = 4,       $B_t = R_s = R_b/2$
MPSK,     where n ≥ 3 and M = $2^n$,      $B_t = R_s = R_b/n$

As n increases the transmission bandwidth and minimum channel spacing decreases, which means that it is possible to transfer more information within a given bandwidth. However the receiver becomes more sensitive to unwanted phase noise as n increases, since the constellation points in the phase plane are closer, which means that the phase noise requirements to the carrier and local oscillators become more stringent.

As a suitable compromise QPSK modulation is chosen, mainly because the system requirements may then be fulfilled with components for digital radio equipment, which are readily available on the market in large quantities, thereby reducing the overall cost of the system.

Frequency Plan

The basic principle for construction of the 16 channel frequency plan is to calculate each carrier frequency as:

$$f_c = f_{off} + N \cdot f_s,$$

for N = 1 to 16, where $f_{off}$ is the offset frequency and $f_s$ the channel spacing.

The bit rate is 9.72 Mb/s and since QPSK modulation is used the symbol rates of the I and Q signals are 4.86 Mb/s. Nyquist filtering of these signals yields a 3 dB bandwidth of 2.43 MHz, and the required bandwidth for the modulated carrier is between 4.86 and 9.72 MHz depending on the filter rolloff. A steeper filter results in smaller bandwidth but greater inter symbol interference. To allow for uncritical filtering the channel spacing is set to $f_s$ = 9.72 MHz.

The offset frequency is chosen so that the 2nd harmonics of the lower carriers are placed between the higher carrier frequencies and so that the 3rd harmonic of the lowest carrier is placed above the highest carrier frequency. This implies that the frequency offset is set to $f_{off}$ = 7.5·$f_s$ = 72. 9 MHz.

Finally, the intermediate frequency for the single conversion receiver is set to $f_i$ = 70 MHz, for which compact SAW band-pass filters are obtainable, and the local oscillator frequency is set to $f_{lo} = f_c + f_i$ in order to separate spurious frequencies as far as possible from the carrier frequencies.

This yields the frequency plan shown below in which the carrier, local oscillator, image, spurious and harmonic frequencies are listed. Since the receiver is just as sensitive to the image as to the carrier frequency a low-pass filter for the low channel receivers is necessary. This splits up the receiver in two frequency bands and for practical reasons the lower band includes channels 1-8 and the upper band channels 9-16.

Frequency Plan for 16 channel 9.72 MB/s QPSK system with 70 MHz IF receiver:

| Chann. No. | Carrier $f_c$ | Loc. osc $f_{lo}$ | Image $f_{lo}$ + $f_1$ | 1st Spur $2 \cdot f_{lo}$ - $f_1$ | 2nd Spur $2 \cdot f_{lo}$ + $f_1$ | 3rd Spur $3 \cdot f_{lo}$ - $f_i$ | 4th Spur $3 \cdot f_{lo}$ + $f_1$ | 2nd Harm $2 \cdot f_c$ | 3rd Harm $3 \cdot f_c$ |
|---|---|---|---|---|---|---|---|---|---|
| 1 | 82.62 | 152.62 | 222.62 | 235.24 | 375.24 | 387.86 | 527.86 | 165.24 | 247.86 |
| 2 | 92.34 | 162.34 | 232.34 | 254.68 | 394.68 | 417.02 | 557.02 | 184.68 | 277.02 |
| 3 | 102.06 | 172.06 | 242.06 | 274.12 | 414.12 | 446.18 | 586.18 | 204.12 | 306.18 |
| 4 | 111.78 | 181.78 | 251.78 | 293.56 | 433.56 | 475.34 | 615.34 | 223.56 | 335.34 |
| 5 | 121.50 | 191.50 | 261.50 | 313.00 | 453.00 | 504.00 | 644.50 | 243.00 | 364.50 |
| 6 | 131.22 | 201.22 | 271.22 | 332.44 | 472.44 | 533.66 | 673.66 | 262.44 | 393.66 |
| 7 | 140.94 | 210.94 | 280.94 | 351.88 | 491.88 | 562.82 | 702.82 | 281.88 | 422.82 |
| 8 | 150.66 | 220.66 | 290.66 | 371.32 | 511.32 | 591.98 | 731.98 | 301.32 | 451.98 |
| 9 | 160.38 | 230.38 | 300.38 | 390.76 | 530.76 | 621.14 | 761.14 | 320.76 | 481.14 |
| 10 | 170.10 | 240.10 | 310.10 | 410.20 | 550.20 | 650.30 | 790.30 | 340.20 | 510.30 |
| 11 | 179.82 | 249.82 | 319.82 | 429.64 | 569.64 | 679.46 | 819.46 | 359.64 | 539.46 |
| 12 | 189.54 | 259.54 | 329.54 | 449.08 | 589.08 | 708.62 | 848.62 | 379.08 | 568.62 |
| 13 | 199.26 | 269.26 | 339.26 | 468.52 | 608.52 | 737.78 | 877.78 | 398.52 | 597.78 |
| 14 | 208.98 | 278.98 | 348.98 | 487.96 | 627.96 | 766.94 | 906.94 | 417.96 | 626.94 |
| 15 | 218.70 | 288.70 | 358.70 | 507.40 | 647.40 | 796.10 | 936.10 | 437.40 | 656.10 |
| 16 | 228.42 | 298.42 | 368.42 | 526.82 | 666.84 | 825.26 | 965.26 | 456.84 | 685.26 |

Dynamic Range

The PON system is designed to work error-free in the absence of OBN with attenuations between 10 and 25 dB in the optical paths between the OLT and the ONUs, corresponding to an optical dynamic range of 15 dB. The OLT constantly transmits $P_S$ = -4.0 dBm of optical mean power, so the received mean power in the ONUs $P_R$ will be between -14 and -29 dBm.

In order to establish the mean output power required to ensure second harmonics below -10dBc, corresponding to at least 20dB below the carrier measured with an electrical spectrum analyzer in the OLT monitor point in Figure 7, the calibration procedure above is used.

Although a preferred embodiment of the present invention has been described and shown, the invention is not restricted to it, but may also be embodied in other ways within the scope of the subject-matter defined in the following claims.

**Claims**

1. A method of initialisation of an optical transmitter, said optical transmitter being adapted to provide optical output power (P) as a function of a current (I) through the transmitter, and wherein a substantially linear relationship exists between the current and the optical output power for at least current values in an interval above a reference current limit ($I_{Th}$), while a non-linear relationship exists between the current and the optical output power for at least current values in an interval below said reference current limit, said method comprising the steps of:

   • applying to the transmitter a current comprising a DC current modulated with an AC modulation current, causing an optical mean power and an optical AC power to be emitted from the transmitter, said AC modulation current being selected from a range having a lower current limit ($2I_{1,min}$) and an upper current limit ($2I_{1,max}$),
   • measuring the optical output power from the transmitter and a level of distortion thereof due to said non-linear relationship,
   • setting the modulation current to said_lower current limit ($2I_{1,min}$), and
   • adjusting the optical mean power to a level which results in a predefined level of said distortion,

   **characterized in that** the method further comprises the step of:

   • defining an allowed minimum optical mean power value being a predefined factor higher than said optical mean power level resulting in a predefined level of distortion.

2. A method according to claim 1, **characterized in that** it further comprises the steps of

   • setting the modulation current to said upper current limit ($2I_{1,max}$),
   • adjusting the optical mean power to a level which results in said predefined level of distortion,
   • and defining an allowed maximum optical mean power value as said optical mean power level, resulting in a predefined level of distortion, multiplied by said predefined factor.

3. A method according to claim 1 or 2, **characterized in that** said AC modulation current is applied as a sinusoidal current.

4. A method according to claim 3, **characterized in that** said level of distortion of the optical output power is measured as a harmonic distortion of said sinusoidal AC modulation current.

5. A method according to claim 4, **characterized in that** the harmonic distortion is measured as a level of a second harmonic of said sinusoidal AC modulation current.

6. A method according to any one of claim 1 to 5, **characterized in that** it further comprises the step of transmitting the optical output power through an attenuation device adjustable to attenuations between and including a minimum attenuation value and a maximum attenuation value before measuring the power.

7. A method according to claim 6, **characterized in that** it comprises the steps of:

   • setting the adjustable attenuation device to said maximum attenuation value,
   • setting said optical mean power to a predefined allowable maximum optical mean power,
   • increasing the modulation current until a predefined target level of optical AC power is measured at the output of the adjustable attenuation device,
   • reducing the optical mean power to a first level for which said distortion is at or below said predefined distortion level,
   • readjusting the modulation current during the above step, if needed, so that said predefined target level of optical AC power is maintained at the output of the adjustable attenuation device,
   • defining the setting of the modulation current as the allowed maximum modulation current,
   • setting the adjustable attenuation device to said minimum attenuation value,
   • turning the modulation current off,

• increasing the modulation current until the predefined target level of optical AC power is measured at the output of the adjustable attenuation device,
• reducing the optical mean power to a second level for which said distortion is at or below said predefined distortion level,
• readjusting the modulation current during the above step, if needed, so that said predefined target level of optical AC power is maintained at the output of the adjustable attenuation device,
• defining the setting of the modulation current as the allowed minimum modulation current,
• calculating an allowed maximum optical mean power as said first level multiplied by said predefined factor,
• and calculating an allowed minimum optical mean power as said second level multiplied by said predefined factor.

8. A method according to any one of claims 1 to 7, **characterized in that** it comprises the steps of:

• connecting the optical transmitter to an optical network comprising at least one optical receiver, said network having an optical attenuation between said transmitter and said receiver,
• setting the optical mean power of the transmitter to a value which is the sum of a constant optical power and an optical power proportional to the optical attenuation between said transmitter and said receiver,
• and setting the modulation current of the transmitter to a value which is proportional to the optical attenuation between said transmitter and said receiver.

9. A method according to claim 8, **characterized in that** the modulation current is set to the allowed maximum modulation current divided by the maximum attenuation value and multiplied by the optical attenuation between said transmitter and said receiver.

10. A method according to claim 9, **characterized in that** the optical mean power is set to

$$P_{0,\max} - \frac{P_{0,\max} - P_{0,\min}}{A_{\max} - A_{\min}}(A_{\max} - A)$$

where $P_{0,max}$ is the allowed maximum optical mean power, $P_{0,min}$ is the allowed minimum optical mean power, $A_{max}$ is the maximum attenuation value, $A_{min}$ is the minimum attenuation value, and $A$ is the optical attenuation between said transmitter and said receiver.

11. A method according to claim 10, **characterized in that** it comprises the steps of

• setting the modulation current and the optical mean power to the values corresponding to the minimum attenuation value,
• measuring the received optical AC power in the receiver,
• in case the predefined target level of optical AC power is not reached, setting the modulation current and the optical mean power to the values corresponding to stepwise increased attenuation values, until the predefined target level of optical AC power is reached.

12. A method according to claim 10, wherein the receiver transmits optical signals at a fixed level back to the transmitter, **characterized in that** it comprises the steps of

• measuring the level of the optical signals received in the transmitter,
• calculating the optical attenuation between said transmitter and said receiver as said fixed level divided by the received level,
• and setting the optical mean power to the value corresponding to the calculated attenuation value.

13. A method according to claim 12, **characterized in that** it further comprises the step of:

• setting the modulation current to the value corresponding to the calculated attenuation value.

14. A method according to claim 12, **characterized in that** it further comprises the steps of:

• setting the modulation current to the value corresponding to the minimum attenuation value,
• measuring the received optical AC power in the receiver,
• in case the predefined target level of optical AC power is not reached, setting the modulation current to the value corresponding to stepwise increased attenuation values, until the predefined target level of optical AC power is reached.

15. A method according to any one of claims 12 or 14, **characterized in that** the setting of the optical mean power to the value corresponding to the calculated attenuation value is performed by increasing the optical mean power slowly until the value is reached.

16. A method according to claim 12 or 13, **characterized in that** the setting of the modulation current to the value corresponding to the calculated attenuation value is performed by increasing the modulation current slowly until the value is reached.

**Patentansprüche**

1. Verfahren zur Initialisierung eines optischen Senders, wobei der optische Sender angepasst ist, um eine Lichtausgangsleistung (P) als eine Funktion eines Stroms (I) durch den Sender zu liefern, und bei dem eine im Wesentlichen lineare Beziehung zwischen dem Strom und der Lichtausgangsleistung für mindestens Stromwerte in einem Intervall über einer Bezugsstromgrenze ($I_{Th}$) vorhanden ist, während eine nichtlineare Beziehung zwischen dem Strom und der Lichtausgangsleistung für mindestens Stromwerte in einem Intervall unter der Bezugsstromgrenze vorhanden ist, wobei das Verfahren die Schritte umfasst:

   • Zuführen eines Stroms zum Sender, umfassend einen Gleichstrom, der mit einem Modulationswechselstrom moduliert ist, wobei bewirkt wird, dass eine mittlere Lichtleistung und eine Lichtwechselstromleistung von dem Sender emittiert werden, wobei der Modulationswechselstrom aus einem Bereich mit einer unteren Stromgrenze ($2I_{1,min}$) und einer oberen Stromgrenze ($2I_{1,max}$) ausgewählt ist,
   • Messen der Lichtausgangsleistung aus dem Sender und eines Verzerrungsniveaus derselben aufgrund der nichtlinearen Beziehung,
   • Setzen des Modulationsstroms auf die untere Stromgrenze ($2I_{1,min}$), und
   • Einstellen der mittleren Lichtleistung auf ein Niveau, das zu einem vordefinierten Niveau der Verzerrung führt,

   **dadurch gekennzeichnet, dass** das Verfahren weiter den Schritt umfasst:

   • Definieren eines zulässigen minimalen mittleren Lichtleistungswerts, der um einen vordefinierten Faktor höher als das mittlere Lichtleistungsniveau ist, das zu einem vordefinierten Verzerrungsniveau führt.

2. Verfahren nach Anspruch 1, **dadurch gekennzeichnet, dass** es weiter die Schritte umfasst

   • Setzen des Modulationsstroms auf die obere Stromgrenze ($2I_{1,max}$),
   • Einstellen der mittleren Lichtleistung auf ein Niveau, das zu dem vordefinierten Verzerrungsniveau führt,
   • und Definieren eines zulässigen maximalen mittleren Lichtleistungswerts als das mittlere Lichtleistungsniveau, das zu einem vordefinierten Verzerrungsniveau führt, multipliziert mit dem vordefinierten Faktor.

3. Verfahren nach Anspruch 1 oder 2, **dadurch gekennzeichnet, dass** der Modulationswechselstrom als ein sinusförmiger Strom zugeführt wird.

4. Verfahren nach Anspruch 3, **dadurch gekennzeichnet, dass** das Verzerrungsniveau der Lichtausgangsleistung als eine harmonische Verzerrung des sinusförmigen Modulationswechselstroms gemessen wird.

5. Verfahren nach Anspruch 4, **dadurch gekennzeichnet, dass** die harmonische Verzerrung als ein Niveau einer zweiten Harmonischen des sinusförmigen Modulationswechselstroms gemessen wird.

6. Verfahren nach einem von Anspruch 1 bis 5, **dadurch gekennzeichnet, dass** es weiter den Schritt umfasst: Senden der Lichtausgangsleistung durch eine Dämpfungsvorrichtung, die auf Dämpfungen zwischen und einschließlich einem minimalen Dämpfungswert und einem maximalen Dämpfungswert einstellbar ist, vor Messen der Leistung.

7. Verfahren nach Anspruch 6, **dadurch gekennzeichnet, dass** es die Schritte umfasst:

   • Setzen der einstellbaren Dämpfungsvorrichtung auf den maximalen Dämpfungswert,
   • Setzen der mittleren Lichtleistung auf eine vordefinierte zulässige maximale mittlere Lichtleistung,
   • Erhöhen des Modulationsstroms, bis ein vordefiniertes Zielniveau von Lichtwechselstromleistung am Ausgang der einstellbaren Dämpfungsvorrichtung gemessen wird,
   • Reduzieren der mittleren Lichtleistung auf ein erstes Niveau, für das die Verzerrung bei oder unter dem vordefinierten Verzerrungsniveau ist,
   • Neueinstellen des Modulationsstroms während des obigen Schritts, falls erforderlich, so dass das vordefinierte Zielniveau von Lichtwechselstromleistung am Ausgang der einstellbaren Dämpfungsvorrichtung aufrechterhalten wird,
   • Definieren des Setzens des Modulationsstroms als der zulässige maximale Modulationsstrom,
   • Setzen der einstellbaren Dämpfungsvorrichtung auf den minimalen Dämpfungswert,
   • Ausschalten des Modulationsstroms,
   • Erhöhen des Modulationsstroms bis das vordefinierte zielniveau von Lichtwechselstromleistung am Ausgang der einstellbaren Dämpfungsvorrichtung gemessen wird,
   • Reduzieren der mittleren Lichtleistung auf ein zweites Niveau, für das die Verzerrung bei oder unter dem vordefinierten Verzerrungsniveau ist,
   • Neueinstellen des Modulationsstroms während des obigen Schritts, falls erforderlich, so dass das vordefinierte Zielniveau von Lichtwechselstromleistung am Ausgang der einstellbaren Dämpfungsvorrichtung aufrechterhalten wird,
   • Definieren des Setzens des Modulationsstroms als der zulässige minimale Modulationsstrom,
   • Berechnen einer zulässigen maximalen mittleren Lichtleistung als das erste Niveau, multipliziert mit dem vordefinierten Faktor,
   • und Berechnen einer zulässigen minimalen mittleren Lichtleistung als das zweite Niveau, multipliziert mit dem vordefinierten Faktor.

8. Verfahren nach einem der Ansprüche 1 bis 7, **dadurch gekennzeichnet, dass** es die Schritte umfasst:

   • Verbinden des optischen Senders mit einem optischen Netzwerk, umfassend mindestens einen optischen Empfänger, wobei das Netzwerk eine optische Dämpfung zwischen dem Sender und dem Empfänger aufweist,
   • Setzen der mittleren Lichtleistung des Senders auf einen Wert, der die Summe einer konstanten Lichtleistung und einer Lichtleistung ist, die proportional zur optischen Dämpfung zwischen dem Sender und dem Empfänger ist,
   • und Setzen des Modulationsstroms des Senders auf einen Wert, der proportional zur optischen Dämpfung zwischen dem Sender und dem Empfänger ist.

9. Verfahren nach Anspruch 8, **dadurch gekennzeichnet, dass** der Modulationsstrom auf den zulässigen maximalen Modulationsstrom, dividiert durch den maximalen Dämpfungswert und multipliziert mit der optischen Dämpfung zwischen dem Sender und dem Empfänger, gesetzt wird.

10. Verfahren nach Anspruch 9, **dadurch gekennzeichnet, dass** die mittlere Lichtleistung auf

$$P_{0,max} - \frac{P_{0max} - P_{0,min}}{A_{max} - A_{min}} (A_{max} - A)$$

gesetzt wird, wobei $P_{0,max}$ die zulässige maximale mittlere Lichtleistung ist, $P_{0,min}$ die zulässige minimale mittlere Lichtleistung ist, $A_{max}$ der maximale Dämpfungswert ist, $A_{min}$ der minimale Dämpfungswert ist und A die optische Dämpfung zwischen dem Sender und dem Empfänger ist.

11. Verfahren nach Anspruch 10, **dadurch gekennzeichnet, dass** es die Schritte umfasst

   • Setzen des Modulationsstroms und der mittleren Lichtleistung auf die Werte entsprechend dem minimalen Dämpfungswert,
   • Messen der empfangenen Lichtwechselstromleistung im Empfänger,
   • im Fall, dass das vordefinierte Zielniveau von Lichtwechselstromleistung nicht erreicht wird: Setzen des Modulationsstroms und der mittleren Lichtleistung auf die Werte entsprechend schrittweise erhöhten Dämpfungswerten, bis das vordefinierte Zielniveau von Lichtwechselstromleistung erreicht ist.

**12.** Verfahren nach Anspruch 10, bei dem der Empfänger optische Signale bei einem festen Niveau zurück zum Sender sendet, **dadurch gekennzeichnet, dass** es die Schritte umfasst

- Messen des Niveaus der optischen Signale, die im Sender empfangen werden,
- Berechnen der optischen Dämpfung zwischen dem Sender und dem Empfänger als das feste Niveau, dividiert durch das empfangene Niveau,
- und Setzen der mittleren Lichtleistung auf den Wert entsprechend dem berechneten Dämpfungswert.

**13.** Verfahren nach Anspruch 12, **dadurch gekennzeichnet, dass** es weiter den Schritt umfasst:

- Setzen des Modulationsstroms auf den Wert entsprechend dem berechneten Dämpfungswert.

**14.** Verfahren nach Anspruch 12, **dadurch gekennzeichnet, dass** es weiter die Schritte umfasst:

- Setzen des Modulationsstroms auf den Wert entsprechend dem minimalen Dämpfungswert,
- Messen der empfangenen Lichtwechselstromleistung im Empfänger,
- im Fall, dass das vordefinierte Zielniveau von Lichtwechselstromleistung nicht erreicht wird: Setzen des Modulationsstroms auf den Wert entsprechend schrittweise erhöhten Dämpfungswerten, bis das vordefinierte Zielniveau von Lichtwechselstromleistung erreicht ist.

**15.** Verfahren nach einem der Ansprüche 12 oder 14, **dadurch gekennzeichnet, dass** das Setzen der mittleren Lichtleistung auf den Wert entsprechend dem berechneten Dämpfungswert durch langsames Erhöhen der mittleren Lichtleistung ausgeführt wird, bis der Wert erreicht ist.

**16.** Verfahren nach Anspruch 12 oder 13, **dadurch gekennzeichnet, dass** das Setzen des Modulationsstroms auf den Wert entsprechend dem berechneten Dämpfungswert durch langsames Erhöhen des Modulationsstroms ausgeführt wird, bis der Wert erreicht ist.

### Revendications

**1.** Procédé d'initiallsation d'un transmetteur optique, ledit transmetteur optique étant adapté de manière à fournir une puissance optique de sortie (P) en fonction d'un courant (I) à travers le transmetteur, et dans lequel une relation sensiblement linéaire existe entre le courant et la puissance optique de sortie pour au moins des valeurs de courant dans un intervalle au-dessus d'une limite de courant de référence ($I_{Th}$), tandis qu'une relation non linéaire existe entre le courant et la puissance optique de sortie pour au moins des valeurs de courant dans un intervalle au-dessous de ladite limite de référence, ledit procédé comprenant les étapes consistant à :

- appliquer au transmetteur un courant comprenant un courant continu modulé par un courant alternatif de modulation, faisant en sorte qu'une puissance optique moyenne et une puissance optique alternative soient émises depuis le transmetteur, ledit courant alternatif de modulation étant sélectionné à partir d'une plage ayant une limite Inférieure de courant ($2I_{1,min}$) et une limite supérieure de courant ($2I_{1,max}$).
- mesurer la puissance optique de sortie provenant du transmetteur et un niveau de distorsion de celle-ci, due à ladite relation non linéaire,
- régler le courant de modulation à ladite limite inférieure de courant ($2I_{1,min}$)
- et ajuster la puissance optique moyenne à un niveau qui a pour résultat un niveau prédéfini de ladite distorsion,

**caractérisé en ce que** le procédé comprend en outre l'étape consistant à :

- définir une valeur minimale permise de puissance optique moyenne étant plus élevée, d'un facteur prédéfini, que ledit niveau de puissance optique moyenne ayant pour résultat un niveau prédéfini de distorsion.

**2.** Procédé selon la revendication 1, **caractérisé en ce qu'**il comprend en outre les étapes consistant à :

- régler le courant de modulation à une limite supérieure de courant ($2I_{1,max}$),

• ajuster la puissance optique moyenne à un niveau qui a pour résultat ledit niveau prédéfini de distorsion
• et définir une valeur maximale permise de puissance optique moyenne en tant que ledit niveau de puissance optique moyenne, ayant pour résultat un niveau prédéfini de distorsion, multiplié par ledit facteur prédéfini.

**3.** Procédé selon la revendication 1 ou 2, **caractérisé en ce que** ledit courant alternatif de modulation est appliqué sous la forme d'un courant sinusoïdal.

**4.** Procédé selon la revendication 3, **caractérisé en ce que** ledit niveau de distorsion de la puissance optique de sortie est mesuré comme une distorsion harmonique dudit courant alternatif de modulation.

**5.** Procédé selon la revendication 4, **caractérisé en ce que** la distorsion harmonique est mesurée comme un niveau d'une seconde harmonique dudit courant alternatif sinusoïdal de modulation.

**6.** Procédé selon l'une quelconque des revendications 1 à 5, **caractérisé en ce qu'**il comprend en outre l'étape consistant à transmettre la puissance optique de sortie à travers un dispositif à affaiblissement ajustable à des affaiblissements entre, et incluant, une valeur d'affaiblissement minimal et une valeur d'affaiblissement maximal, avant de mesurer la puissance.

**7.** Procédé selon la revendication 6, **caractérisé en ce qu'**il comprend les étapes consistant à :

• ajuster le dispositif à affaiblissement ajustable à ladite valeur d'affaiblissement maximal,
• régler ladite puissance optique moyenne à une puissance optique moyenne maximale permissible prédéfinie,
• augmenter le courant de modulation jusqu'à ce qu'un niveau cible prédéfini de puissance optique alternative soit mesuré à la sortie du dispositif à affaiblissement ajustable,
• réduire la puissance optique moyenne à un premier niveau pour lequel ladite distorsion se situe au niveau, ou au-dessous du niveau, prédéfini de distorsion,
• réajuster le courant de modulation pendant l'étape ci-dessus, le cas échéant, de manière que ledit niveau cible prédéfini de puissance optique alternative soit maintenu à la sortie du dispositif à affaiblissement ajustable,
• définir le réglage du courant de modulation comme étant le courant de modulation maximal permis,
• régler le dispositif à affaiblissement ajustable à ladite valeur d'affaiblissement minimal,
• arrêter le courant de modulation,
• augmenter le courant de modulation jusqu'à ce que le niveau cible prédéfini de la puissance optique alternative soit mesuré à la sortie du dispositif à affaiblissement ajustable,
• réduire la puissance optique moyenne jusqu'à un deuxième niveau pour lequel ladite distorsion se situe audit niveau, ou au-dessous dudit niveau, prédéfini de distorsion,
• réajuster le courant de modulation pendant l'étape ci-dessus, le cas échéant, de manière que ledit niveau cible prédéfini de puissance optique alternative solt maintenu à la sortie du dispositif à affaiblissement ajustable,
• définir le réglage du courant de modulation en tant que courant de modulation maximal permis,
• calculer une puissance optique moyenne maximale permise comme étant ledit premier niveau multiplié par ledit facteur prédéfini
• et calculer une puissance optique moyenne minimale permise comme étant ledit deuxième niveau multiplié par ledit facteur prédéfini.

**8.** Procédé selon l'une quelconque des revendications 1 à 7, **caractérisé en ce qu'**il comprend les étapes consistant à :

• connecter le transmetteur optique à un réseau optique comprenant au moins un récepteur optique, ledit réseau ayant un affaiblissement optique entre ledit transmetteur et ledit récepteur,
• régler la puissance optique moyenne du transmetteur à une valeur qui est la somme d'une puissance optique constante et d'une puissance optique proportionnelle à l'affaiblissement optique entre ledit transmetteur et ledit récepteur,
• et régler le courant de modulation du transmetteur à une valeur qui est proportionnelle à l'affaiblissement optique entre ledit transmetteur et ledit récepteur.

**9.** Procédé selon la revendication 8, **caractérisé en ce que** le courant de modulation est réglé au courant de modulation maximal permis, divisé par la valeur d'affaiblissement maximal et multiplié par l'affaiblissement entre ledit transmetteur et ledit récepteur.

**10.** Procédé selon la revendication 9, **caractérisé en ce que** la puissance optique moyenne est réglée à

$$P_{0,max} - \{(P_{0,max} - P_{0,min}) / (A_{max} - A_{min})\} (A_{max} - A),$$

où $P_{0,max}$ est la puissance optique moyenne maximale permise, $P_{0,min}$ est la puissance optique moyenne minimale permise, $A_{max}$ est la valeur d'affaiblissement maximal, $A_{min}$ est la valeur d'affaiblissement minimal et A est l'affaiblissement optique entre ledit transmetteur et ledit récepteur.

**11.** Procédé selon la revendication 10, **caractérisé en ce qu'**il comprend les étapes consistant à :

• régler le courant de modulation et la puissance optique moyenne aux valeurs correspondant à la valeur d'affaiblissement minimal,
• mesurer la puissance optique alternative reçue dans le récepteur,

et dans le cas où le niveau cible prédéfini de la puissance optique alternative n'est pas atteint, régler le courant de modulation et la puissance optique moyenne aux valeurs correspondant à des valeurs d'affaiblissement augmentées en escalier, jusqu'à ce que le niveau cible prédéfini de la puissance optique alternative soit atteint.

**12.** Procédé selon la revendication 10, dans lequel le récepteur retransmet vers le transmetteur des signaux optiques à un niveau fixe, **caractérisé en ce qu'**il comprend les étapes consistant à :

• mesurer le niveau des signaux optiques reçus dans le transmetteur,
• calculer l'affaiblissement optique entre ledit transmetteur et le dit récepteur comme étant ledit niveau fixe, divisé par le niveau reçu, et
• régler la puissance optique moyenne à la valeur correspondant à la valeur d'affaiblissement calculée.

**13.** Procédé selon la revendication 12, **caractérisé en ce qu'**il comprend en outre l'étape consistant à :

• régler le courant de modulation à la valeur correspondant à la valeur d'affaiblissement calculée.

**14.** Procédé selon la revendication 12, **caractérisé en ce qu'**il comprend les étapes consistant à :

• régler le courant de modulation à la valeur correspondant à la valeur d'affaiblissement minimal,
• mesurer la puissance optique alternative reçue dans le récepteur,
• et dans le cas où le niveau cible prédéfini de puissance optique alternative n'est pas atteint, régler le courant de modulation à la valeur correspondant à des valeurs d'affaiblissement augmentées en escalier, jusqu'à ce que le niveau cible prédéfini de puissance optique alternative soit atteint.

**15.** Procédé selon la revendication 12 ou 14, **caractérisé en ce que** le réglage de la puissance optique moyenne à la valeur correspondant à la valeur d'affaiblissement calculée est effectué en augmentant la puissance optique moyenne lentement jusqu'à ce que la valeur soit atteinte.

**16.** Procédé selon la revendication 12 ou 13, **caractérisé en ce que** le réglage du courant de modulation à la valeur correspondant à la valeur d'affaiblissement calculée est effectué en augmentant le courant de modulation lentement jusqu'à ce que la valeur soit atteinte.

Fig. 1

EP 1 109 336 B1

Fig. 2

Fig. 3

Fig. 4

Fig. 5

Fig. 6

Fig. 7